(19) **Europäisches Patentamt / European Patent Office / Office européen des brevets**

(11) **EP 3 604 412 B1**

(12) ## EUROPEAN PATENT SPECIFICATION

(45) Date of publication and mention
of the grant of the patent:
**29.06.2022 Bulletin 2022/26**

(21) Application number: **18777087.0**

(22) Date of filing: **30.03.2018**

(51) International Patent Classification (IPC):
**C08J 9/04** (2006.01)   **B32B 5/18** (2006.01)
**B32B 27/32** (2006.01)   **B60R 13/02** (2006.01)
**C08J 9/00** (2006.01)

(52) Cooperative Patent Classification (CPC):
**C08J 9/0061; B32B 5/18; B32B 27/32;
B60R 13/02;** C08J 2201/026; C08J 2323/04;
C08J 2323/10; C08J 2323/16; C08J 2423/04;
C08J 2423/10; C08J 2423/16

(86) International application number:
**PCT/JP2018/014013**

(87) International publication number:
**WO 2018/182034 (04.10.2018 Gazette 2018/40)**

(54) **FOAM AND MOLDED ARTICLE**

SCHAUM UND FORMKÖRPER

MOUSSE ET ARTICLE MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017 JP 2017073112**

(43) Date of publication of application:
**05.02.2020 Bulletin 2020/06**

(73) Proprietor: **Sekisui Chemical Co., Ltd.
Osaka-shi, Osaka 530-8565 (JP)**

(72) Inventors:
• **HIRAIKE, Hiroshi
Hasuda-shi
Saitama 349-0198 (JP)**
• **YACHI, Koji
Hasuda-shi
Saitama 349-0198 (JP)**
• **NAKAJIMA, Nami
Mishima-gun
Osaka 618-0021 (JP)**

• **OOSATO, Yasuo
Hasuda-shi
Saitama 349-0198 (JP)**
• **HANDA, Atsushi
Hasuda-shi
Saitama 349-0198 (JP)**
• **KUSAKA, Yasunari
Mishima-gun
Osaka 618-0021 (JP)**

(74) Representative: **Ter Meer Steinmeister & Partner
Patentanwälte mbB
Nymphenburger Straße 4
80335 München (DE)**

(56) References cited:
**EP-A1- 2 806 453      WO-A1-2016/052555
JP-A- 2004 276 261    JP-A- 2004 276 261
JP-A- 2007 284 486    JP-A- 2013 057 070
JP-A- 2016 030 772    JP-A- 2016 030 772
US-A- 5 110 842**

**Description**

Technical Field

The present invention relates to a foam and a formed article using the foam.

Background Art

In recent years, foams have been used in various applications corresponding to the types.

Among them, crosslinked polyolefin-based resin foams are excellent in mechanical strength, flexibility, lightweight properties, heat-insulating properties, and are widely used in various fields as heat insulators, cushion members, laminates with skin materials. For example, in the automotive field, they are used as interior materials for vehicles such as ceiling materials, doors, and instrument panels. Such interior materials for vehicles are generally formed into predetermined shapes by secondary processing of sheet-like crosslinked polyolefin-based resin foams by vacuum forming, compression molding. Further, crosslinked polyolefin-based resin foams are widely used as laminates obtained by bonding with sheet-like materials, including resins or elastomer sheets such as polyvinyl chloride resins and thermoplastic elastomers, and natural or artificial cloth materials.

Meanwhile, complex shapes have been recently required also in car interior materials with diversification and advancement of preferences, and improvement in productivity has been further required. Therefore, wrinkles tend to occur on foam surfaces in the secondary processing of resin foams, and there is a growing problem of poor appearance. Accordingly, improvement of resin materials for solving the problem of poor appearance while maintaining the flexibility of resin foams is required.

For example, PTL 1 discloses a crosslinked polyolefin-based resin foam that contains a thermoplastic elastomer in an amount of 25 to 50 parts by weight relative to 100 parts by weight of a resin composition composed of a polyethylene-based resin with at least one of DSC endothermic peaks of 160°C or more and a polypropylene-based resin, and has an apparent density of 50 to 100 kg/m$^3$ and a gel fraction of 45% or more. PTL 2 and PTL 3 disclose crosslinked polyolefin-based foams comprising a mixture of polyolefins having different endothermic peak and melt flow rate.

Citation List

Patent Literature

PTL 1: JP 2008-266589 A
PTL 2: JP 2016 030772 A
PTL 3: JP 2004 276261 A

Summary of Invention

Technical Problems

When a thermoplastic elastomer is added to a polyolefin-based resin material, as in PTL 1, the flexibility of a foam is enhanced, but the formability in the secondary processing is reduced. Therefore, in order to improve the formability, attempts have been made to enhance the degree of crosslinking of the entire foam or to mix a polypropylene resin having a high melting point.

However, when the formability is improved by enhancing the degree of crosslinking of the entire foam or mixing a resin having a high melting point, the flexibility of the foam is impaired, resulting in problems of poor texture and poor appearance of a formed article.

The present invention has been devised in view of the problems described above, and an object thereof is to provide a foam capable of yielding a formed article having excellent appearance even in the secondary processing into a complex shape without impairing the flexibility, and a formed article using the foam.

Solution to problems

As a result of diligent studies, the inventor has found that a foam having excellent flexibility and excellent formability can be obtained by providing a foam and a formed article as defined in the appended claims.

Advantageous Effect of Invention

The present invention can provide a foam with softness that is felt as a touch while enhancing the formability.

Brief Description of Drawing

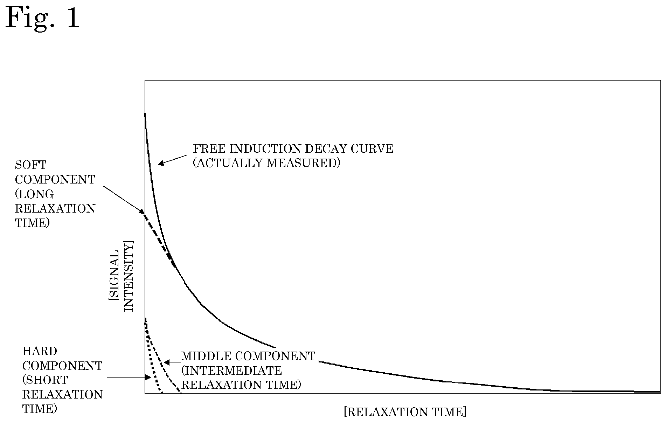

[Fig. 1] Fig. 1 is a conceptual diagram of three-component analysis by pulsed NMR measurement.

Description of Embodiments

Hereinafter, the present invention will be illustrated further in detail by way of embodiments.

[Foam]

(25% compressive strength)

The foam may have a 25% compressive strength at 23°C of 90 kPa or less. When the compressive strength is over 90 kPa, the flexibility of the foam becomes insufficient and gives a hard sense of touch.

The 25% compressive strength is preferably 80 kPa or less, more preferably 70 kPa or less, for further improving the flexibility and the texture.

The lower limit of the 25% compressive strength of the foam is not specifically limited but is preferably 20 kPa or more, more preferably 30 kPa or more, for further enhancing the formability and the mechanical strength.

The 25% compressive strength can be adjusted by the type, the expansion ratio of resins. For example, the value of the 25% compressive strength can be reduced by regulating the content of the polyolefin-based resins, which will be described below. Further, the value of the 25% compressive strength can be reduced also by increasing the expansion ratio.

(Elongation at break)

The foam may have an elongation at break at 160°C, as measured according to JIS K 6251, of 200% or more. When the elongation at break at 160°C is 200% or more, the formability in forming the foam into a desired shape is improved and the occurrence of wrinkles is suppressed. As a result, the foam is suitably formed into various formed articles such as interior materials for vehicles.

The elongation at break at 160°C is preferably 210% or more, more preferably 220% or more, further preferably 250% or more.

The upper limit of the elongation at break at 160°C is not specifically limited but is preferably 400% or less, more preferably 380% or less, for the ease of production.

A foam according to the present invention is a foam, wherein in a technique to determine proportions of three components, hard, middle, and soft components, by pulsed NMR measurement, a proportion of a hard component at 30°C is 50% or less relative to all components and a proportion of a middle component at 160°C is 65% or less relative to all components.

The foam is separated into three components, hard, middle, and soft components, and the amount of each component at a certain temperature can be specified by pulsed NMR measurement.

Fig. 1 shows a conceptual diagram of three-component analysis by pulsed NMR measurement. A free induction decay curve due to $^1H$ spin-spin relaxation is obtained by subjecting the foam to pulsed NMR measurement. The waveforms of the free induction decay curve obtained can be separated into three curves derived from three components, hard, middle, and soft components, sequentially, from the shorter relaxation time. That is, a free induction decay curve actually measured is obtained by superimposition of free induction decay curves derived from three components, hard, middle, and soft components. Such an analysis technique of separating an object into three components using pulsed NMR is known, and examples of literatures include DIC Technical Review No. 12/2006 "analysis of phase separation structure of polyurethane resin by solid NMR (high resolution NMR and pulsed NMR)".

The hard component is a component that has a short relaxation time in pulsed NMR measurement, and means such a component with a low molecular mobility and hardness. Meanwhile, the soft component is a component that has a long relaxation time in pulsed NMR measurement, and means such a component with a high molecular mobility and softness. The middle component has a relaxation time between those of the hard component and the soft component in pulsed NMR measurement, and thus has a molecular mobility between those of the hard component and the soft component.

The foam according to the present invention has a proportion of the hard component at 30°C of 50% or less relative to all components. When the proportion of the hard component at 30°C is over 50% relative to all components, the flexibility of the foam tends to decrease. The proportion of a hard component indicates a mass proportion of a hard component relative to all components, and similar definition applies to the proportions of other middle component and soft component.

For further enhancing the flexibility of the foam, the proportion of the hard component at 30°C is preferably 45% or less, more preferably 40% or less, relative to all components.

The 25% compressive strength is easily adjusted to the aforementioned values by adjusting the proportion of the hard component at 30°C relative to all components as mentioned above.

The proportion of the hard component at 30°C is generally 5% or more, preferably 10% or more, relative to all components.

It is considered that the proportion of the hard component at 30°C in the foam according to the present invention is associated with the characteristics of the foam in normal use, and softness can be felt as a touch by adjusting the proportion to a certain value or less, as mentioned above.

The foam according to the present invention has a proportion of the middle component at 160°C of 65% or less relative to all components. This improves the formability when forming the foam into a desired shape, suppresses the occurrence of wrinkles and makes the foam suitable for forming into various formed articles such as interior materials for vehicles.

For further enhancing the formability of the foam, the proportion of the middle component at 160°C is preferably 64% or less, more preferably 62% or less, relative to all components.

The elongation at break at 160°C is easily adjusted to the aforementioned values by adjusting the proportion of the middle component at 160°C relative to all components as mentioned above.

The proportion of the middle component at 160°C is generally 5% or more, preferably 10% or more, relative to all components.

In the present invention, pulsed NMR measurement is conducted by the solid echo method when the proportion of the hard component at 30°C relative to all components is measured and is conducted by the Hahn echo method when the proportion of a middle component at 160°C relative to all components is measured. The details of the pulsed NMR measurement are as described in Examples. In the foam of the present invention, the hard component, the middle component, and the soft component are components identified sequentially from the shorter relaxation time in pulsed NMR measurement. The value of the relaxation time of each component is not specifically limited. However, generally in the Solid echo method, the value for the hard component is in the range of less than 0.02 msec and the value for the middle component is in the range of 0.02 msec or more. In the Hahn echo method, the value for the hard component is in the range of less than 2.5 msec, the value for the middle component is in the range of 2.5 msec or more and less than 10.0 msec, and the value for the soft component is in the range of 10.0 msec or more.

For further enhancing the flexibility and the formability, the foam according to the present invention preferably satisfies the requirement for the values of the 25% compressive strength at 23°C and the elongation at break at 160°C measured according to JIS K 6251, as described above.

(Degree of crosslinking)

The foam is preferably a foam produced by crosslinking and foaming. In the case of the foam produced by crosslinking and foaming, the degree of crosslinking (mass%) of the foam is preferably 30 to 50%. When the degree of crosslinking of the foam is 30% or more, the mechanical strength of the foam is further improved, and the formability of the foam is further enhanced. Further, a viscosity necessary for foaming a foamable composition can be imparted.

Meanwhile, when the degree of crosslinking of the foam is 50% or less, the elongation of the foam is further improved, breaks are less likely to occur, and formed articles can be accurately formed as designed. Also, the foamability of the foamable composition is further improved, a foam with a high expansion ratio is easily obtained, and the appearance of the foam is further improved.

The degree of crosslinking is calculated from the following formula using the method described in Examples by collecting solvent-insoluble residues and determining weight A of a test piece and weight B of the insoluble residues.

$$\text{Degree of crosslinking (mass\%)} = (\text{B/A}) \times 100$$

For further enhancing the formability and the mechanical properties of the foam, the degree of crosslinking of the foam is preferably 32 to 48%, more preferably 35 to 45%.

(Density)

The density (apparent density) of the foam according to each embodiment is not specifically limited but is preferably 0.036 g/cm³ or more and 0.133 g/cm³ or less, for balancing the improvement in the flexibility and the mechanical strength. The density of the foam is more preferably 0.040 g/cm³ or more, further preferably 0.050 g/cm³ or more. Further, the density of the foam is more preferably 0.120 g/cm³ or less, further preferably 0.110 g/cm³ or less, furthermore preferably 0.100 g/cm³ or less.

(Thickness)

The foam is preferably in the form of a sheet. The specific thickness of the foam is not particularly limited but is preferably 0.5 to 5.0 mm, more preferably about 1 to 4 mm. When the thickness falls within the aforementioned ranges, the foam is easily formed into interior materials for vehicles by vacuum forming.

[Foamable composition]

The foam is produced by crosslinking and foaming a foamable composition. The foam is a crosslinked polyolefin-based resin foam. The foamable composition for obtaining such a crosslinked polyolefin-based resin foam contains a polyolefin-based resin.

The foamable composition for obtaining such a crosslinked polyolefin-based resin foam contains a polyolefin-based resin (which may be hereinafter referred to as a component (A)) having an endothermic peak, as measured by a differential scanning calorimeter (DSC), present at 160°C or more and a melt flow rate (MFR) at 230°C of 2.0 to 20 g/10 minutes. When the component (A) is contained, the 25% compressive strength, the elongation at break at 160°C, and the proportion of each component measured by pulsed NMR are easily adjusted to the aforementioned ranges.

The foamable composition for obtaining such a crosslinked polyolefin-based resin foam contains the component (A) in an amount of 10 to 30 mass% relative to the total amount of resin components in the foamable composition. Further, the foamable composition contains a polyolefin-based resin (which may be hereinafter referred to also as component (B)) having an endothermic peak, as measured by a differential scanning calorimeter (DSC), present at 130 to 150°C and a melt flow rate (MFR) at 230°C of 0.4 to 2.0 g/10 minutes in an amount of 30 to 50 mass% relative to the total amount of resin components in the foamable composition, in addition to the component (A).

Further, the foamable composition contains a polyolefin-based resin (which may be hereinafter referred to also as component (C)) having an endothermic peak, as measured by a differential scanning calorimeter (DSC), present at 110 to 150°C and a melt flow rate (MFR) at 190°C of 2.5 to 20 g/10 minutes in an amount of 30 to 50 mass% relative to the total amount of resin components in the foamable composition, in addition to the components (A) and (B).

When the component (A), the component (B), and the component (C) are contained in such predetermined amounts, the 25% compressive strength, the elongation at break at 160°C, and the proportion of each component measured by pulsed NMR are easily adjusted to the aforementioned ranges, so that a foam that is further excellent in flexibility and formability can be obtained.

Hereinafter, components used for the foamable composition will be described.

[Component (A)]

The component (A) is a polyolefin-based resin having an endothermic peak, as measured by a differential scanning calorimeter (DSC), present at 160°C or more and a melt flow rate (MFR) at 230°C of 2.0 to 20 g/10 minutes.

The melt flow rate (which may be hereinafter referred to also as "MFR") at 230°C of the component (A) is set to 2.0 to 20 g/10 minutes. When the MFR at 230°C of the component (A) is below 2.0 g/10 minutes or over 20 g/10 minutes, the fluidity of the resin decreases, or the flowability of the resin increases, excessively, and the workability in processing the foamable composition into a foam is reduced.

For enhancing the workability, the MFR at 230°C of the component (A) is preferably 4.0 to 16 g/10 minutes, more preferably 6.0 to 12 g/10 minutes.

In the foamable composition, the component (A) accounts for 10 to 30 mass% relative to the total amount of resin components contained in the foamable composition. When the content of the component (A) is less than 10 mass%, the mechanical strength of the foam decreases, and therefore breaks tend to occur in formed articles at the time of forming. Further, when the content is over 30 mass%, the foamability decreases, breaks tend to occur, and formed articles cannot be accurately formed as designed. The component (A) preferably accounts for 12 to 28 mass%, more preferably 15 to 25 mass% relative to the total amount of resin components.

The component (A) has an endothermic peak, as measured by a differential scanning calorimeter (DSC), present at 160°C or more. The component (A) needs only to have an endothermic peak, as measured by a differential scanning calorimeter (DSC), present at 160°C or more. Specifically, a polypropylene-based resin or an olefin-based rubber can be used as the component (A).

[Polypropylene-based resin]

The polypropylene-based resin is not specifically limited, and examples thereof include propylene homopolymers (homopolypropylene), copolymers of propylene with other olefins. Such a copolymer of propylene with another olefin may be any one of block copolymers, random copolymers, and random block copolymers but is preferably a propylene homopolymer (homopolypropylene), a block copolymer (block polypropylene), or a random block copolymer (random block polypropylene).

Examples of the other olefin copolymerized with propylene include $\alpha$-olefins such as ethylene, 1-butene, 1-pentene, 4-methyl-1-pentene, 1-hexene, 1-octene, 1-nonene, and 1-decene. Among these, ethylene is preferable. That is, an ethylene-propylene block copolymer and an ethylene-propylene random block copolymer are preferable as the polypropylene resin.

[Olefin-based rubber]

The olefin-based rubber is preferably an amorphous or low crystalline rubbery material formed by copolymerization of two or more olefin monomers substantially at random, more preferably an ethylene-$\alpha$-olefin copolymer rubber, for achieving balanced improvement in the formability and the flexibility.

Examples of the $\alpha$-olefin used for the ethylene-$\alpha$-olefin-based copolymer rubber include one or two or more of $\alpha$-olefins having 3 to 15 carbon atoms, preferably 3 to 10 carbon atoms, such as propylene, 1-butene, 2-methyl propylene, 3-methyl-1-butene, 1-pentene, 1-hexene, 4-methyl-1-pentene, and 1-octene. Among these, propylene and 1-butene are preferable, and propylene is more preferable.

The ethylene-$\alpha$-olefin-based copolymer rubber may have other monomer units, in addition to ethylene unit and $\alpha$-olefin unit.

Examples of monomers forming the other monomer units include conjugated dienes having 4 to 8 carbon atoms, non-conjugated dienes having 5 to 15 carbon atoms, vinyl ester compounds, unsaturated carboxylic acid esters, and unsaturated carboxylic acids.

Examples of the conjugated dienes having 4 to 8 carbon atoms include 1,3-butadiene, 2-methyl-1,3-butadiene (isoprene), 1,3-pentadiene, and 2,3-dimethyl-1,3-butadiene.

Examples of the non-conjugated dienes having 5 to 15 carbon atoms include dicyclopentadiene, 5-ethylidene-2-norbornene, 1,4-hexadiene, 1,5-dicyclooctadiene, 7-methyl-1,6-octadiene, and 5-vinyl-2-norbornene.

Examples of the vinyl ester compounds include vinyl acetate.

Examples of the unsaturated carboxylic acid esters include methyl acrylate, ethyl acrylate, butyl acrylate, methyl methacrylate, and ethyl methacrylate.

Examples of the unsaturated carboxylic acids include acrylic acid and methacrylic acid.

These monomers can be used singly or in combinations of two or more. Among these, non-conjugated dienes having 5 to 15 carbon atoms are preferable, 5-ethylidene-2-norbornene, 1,4-hexadiene, and dicyclopentadiene (DCPD) are more preferable, for the ease of availability.

Among such ethylene-$\alpha$-olefin-based copolymer rubbers, ethylene-propylene copolymer (EPR) and ethylene-propylene-diene copolymer (EPDM) are preferable. Among them, EPDM is more preferable, ethylene-propylene-5-ethylidene-2-norbornene copolymer and ethylene-propylene-dicyclopentadiene copolymer are more preferable, and ethylene-propylene-dicyclopentadiene copolymer is further preferable.

The content of the ethylene units in such an ethylene-$\alpha$-olefin-based copolymer rubber is generally 30 to 85 mass%, preferably 40 to 80 mass%, more preferably 45 to 75 mass%. The content of the $\alpha$-olefin units having 3 to 15, preferably 3 to 10 carbon atoms, such as propylene, is generally 10 to 60 wt%, preferably 15 to 50 wt%. The content of the other monomer units such as non-conjugated dienes is generally 0 to 20 wt%, preferably 1 to 10 wt%.

The ethylene-$\alpha$-olefin copolymer rubber can be obtained by polymerization using a known method. Examples of the polymerization method include a polymerization method in an inert solvent such as hexane, heptane, toluene, and xylene using a polymerization catalyst such as a Ziegler-Natta catalyst and a metallocene catalyst.

Olefin-based rubbers can be used singly or in combinations of two or more.

Suitable examples of the ethylene-$\alpha$-olefin copolymer rubber include thermoplastic olefinic elastomers (TPOs). Any one of blended, dynamically crosslinked, and polymerized thermoplastic olefinic elastomers can be used. Specific examples of the thermoplastic olefinic elastomers include those containing polypropylene as the hard segment and a copolymer having ethylene, propylene, and a small amount of diene components, as required, as the soft segment. Examples of the copolymer include ethylene-propylene copolymer (EPR) and ethylene-propylene-diene copolymer (EPDM).

Other specific examples of the thermoplastic olefinic elastomers include a blended product of polyethylene and EPR, a product obtained by partially crosslinking a blended product of polyethylene and EPR with an organic peroxide, a product obtained by graft-modifying a blended product of polyethylene and EPR with unsaturated hydroxy monomers, derivatives of unsaturated carboxylic acids, and butyl-grafted polyethylene.

[Component (B)]

The component (B) is a polyolefin-based resin having an endothermic peak, as measured by a differential scanning calorimeter (DSC), present at 130 to 150°C and a melt flow rate (MFR) at 230°C of 0.4 to 2.0 g/10 minutes.

The melt flow rate (MFR) at 230°C of the component (B) is set to 0.4 to 2.0 g/10 minutes. By selecting the melt flow rate (MFR) at 230°C of the component (B) within 0.4 to 2.0 g/10 minutes, good formability during the secondary processing of the foam can be achieved.

The component (B) has an endothermic peak, as measured by a differential scanning calorimeter (DSC), present at 130 to 150°C. The component (B) needs only to have an endothermic peak, as measured by a differential scanning calorimeter (DSC), present at 130 to 150°C. The polypropylene-based resins and the olefin-based rubbers as mentioned above can be specifically used therefor.

A random polypropylene is a copolymer obtained by random copolymerization of propylene with $\alpha$-olefins other than propylene. Examples of the $\alpha$-olefins other than propylene include ethylene having 2 carbon atoms, or $\alpha$-olefins having about 4 to 10 carbon atoms, such as 1-butene, 1-pentene, 1-hexene, 4-methyl-1-pentene, 1-heptene, and 1-octene.

Further, in the copolymer, $\alpha$-olefins can be used singly or in combinations of two or more. Further, a mixture of two or more random polypropylenes may be used as the component (B).

In the present invention, the content of the component (B) is preferably 30 to 50 mass% relative to the total amount of resin components in the foamable composition. More preferably, the content of the component (B) is 35 to 45 mass%.

[Component (C)]

The component (C) is a polyolefin-based resin having an endothermic peak, as measured by a differential scanning calorimeter (DSC), present at 110 to 150°C and a melt flow rate (MFR) at 190°C of 2.5 to 20 g/10 minutes. In the present invention, a foam having excellent flexibility together with good formability can be obtained, by adjusting the melt flow rate (MFR) at 190°C of the component (C), in addition to those of the component (A) and the component (B).

The component (C) has an endothermic peak, as measured by a differential scanning calorimeter (DSC), present at 110 to 150°C. The component (C) needs only to have an endothermic peak, as measured by a differential scanning calorimeter (DSC), present at 110 to 150°C. Specifically, the polypropylene-based resins and the olefin-based rubbers as mentioned above can be used therefor. Examples thereof can include the olefin-based rubbers and linear low-density polyethylenes described above.

Such a linear low-density polyethylene is a polyethylene having a density of 0.910 g/cm$^3$ or more and less than 0.950 g/cm$^3$, preferably 0.910 to 0.930 g/cm$^3$. The foam tends to have good workability when the foamable composition is processed into a foam and good formability when the foam is formed into a formed article by containing a linear low-density polyethylene with a low density, in addition to the aforementioned components (A) and (B).

The linear low-density polyethylene is generally a copolymer of ethylene and a small amount of a-olefins, mainly containing ethylene (50 mass% or more, preferably 70 mass% or more of all monomers). Here, examples of the $\alpha$-olefins include those having 3 to 12 carbon atoms, preferably 4 to 10 carbon atoms. Specifically, examples thereof include 1-butene, 1-pentene, 1-hexene, 4-methyl-1-pentene, 1-heptene, and 1-octene.

In the present invention, the content of the component (C) is preferably 30 to 50 mass% relative to the total amount of resin components in the foamable composition. More preferably, the content of the component (C) is 35 to 45 mass%.

In the present invention, it is preferable to contain a component with a Type D durometer hardness of 60 or less as a resin component in the foamable composition. A foam with more excellent flexibility can be obtained by containing the component with a Type D durometer hardness of 60 or less.

The Type D durometer hardness thereof is preferably 60 or less, more preferably 50 or less.

The content of the component with a Type D durometer hardness of 60 or less is preferably 30 to 70 mass%, more preferably 35 to 65 mass%, further preferably 40 to 60 mass% relative to the total amount of resin components in the foamable composition.

Though not specifically limited, in the present invention, such a resin component with a Type D durometer hardness of 60 or less is contained preferably as the component (B) or the component (C). Both the component (B) and the component (C) may be a resin component with a Type D durometer hardness of 60 or less. For example, the component with a Type D durometer hardness of 60 or less is preferably the aforementioned polyolefin-based resin.

[Other resin components]

The foamable composition may contain resin components other than the components (A), (B), and (C) as long as the object of the present invention is not impaired. Such resin components other than the components (A), (B), and (C) are contained in an amount of generally 30 mass% or less, preferably 15 mass% or less, relative to the total amount of resin components.

[Additives]

The foamable composition generally contains a foaming agent as an additive and preferably further contains one or both of a crosslinking aid and an antioxidant.

(Foaming agent)

As a foaming agent, a thermal decomposition-type foaming agent is used, and an organic or inorganic chemical foaming agent with a decomposition temperature of about 160 to 270°C may be used, for example.
Examples of the organic foaming agent include azodicarbonamide, metal salts of azodicarboxylic acid (such as barium azodicarboxylate), azo compounds such as azobisisobutyronitrile, nitroso compounds such as N,N'-dinitrosopentamethylenetetramine, hydrazine derivatives such as hydrazodicarbonamide, 4,4'-oxybis(benzenesulfonylhydrazide), and toluenesulfonylhydrazide, and semicarbazide compounds such as toluenesulfonylsemicarbazide.
Examples of the inorganic foaming agent include acid ammonium, sodium carbonate, ammonium bicarbonate, sodium bicarbonate, ammonium nitrite, sodium borohydride, and monosodium citrate anhydrous.
Among these, azo compounds and nitroso compounds are preferable, azodicarbonamide, azobisisobutyronitrile, and N,N'-dinitrosopentamethylenetetramine are more preferable, and azodicarbonamide is particularly preferable, for achieving fine air bubbles, economic efficiency, and safety. These thermal decomposition-type foaming agents can be used singly or in combinations of two or more.
The amount of the thermal decomposition-type foaming agents to be added is preferably 1 to 30 parts by mass, more preferably 2 to 15 parts by mass relative to 100 parts by mass of resin components, so that suitable foaming can be achieved without breaking air bubbles of the foam.

(Crosslinking aid)

Examples of the crosslinking aid include trifunctional (meth)acrylate compounds, compounds having three functional groups in one molecule, bifunctional (meth)acrylate compounds, and compounds having two functional groups in one molecule.
Examples of the trifunctional (meth)acrylate compounds include trimethylolpropane trimethacrylate and trimethylolpropane triacrylate.
Examples of the compounds having three functional groups in one molecule include trimellitic acid triallyl ester, 1,2,4-benzenetricarboxylic acid triallyl ester, and triallyl isocyanurate.
Examples of the bifunctional (meth)acrylate compounds include 1,6-hexanediol dimethacrylate, 1,9-nonanediol dimethacrylate, 1,10-decanediol dimethacrylate, and neopentyl glycol dimethacrylate.
Examples of the compounds having two functional groups in one molecule include divinyl benzene.
Examples of crosslinking aids other than above include diallyl phthalate, diallyl terephthalate, diallyl isophthalate, ethyl vinyl benzene, lauryl methacrylate, and stearyl methacrylate.
Such crosslinking aids can be used singly or in combinations of two or more. Among these, the trifunctional (meth)acrylate compounds are more preferable.
Addition of such a crosslinking aid to the foamable composition enables the foamable composition to be crosslinked with a low dose of ionizing radiation. Therefore, cleavage or deterioration of resin molecules resulted from irradiation of ionizing radiation can be prevented.
The content of the crosslinking aids is preferably 0.2 to 20 parts by mass, more preferably 0.5 to 15 parts by mass, relative to 100 parts by mass of resin components. When the content is 0.2 parts by mass or more, the foamable composition is easily adjusted to have a desired degree of crosslinking during foaming. Further, when the content is 20 parts by mass or less, the degree of crosslinking to be given for the foamable composition is easily controlled.

(Antioxidant)

Examples of the antioxidant include phenolic antioxidants, sulfur-based antioxidants, phosphorus-based antioxidants, and amine-based antioxidants. Among these, phenolic antioxidants and sulfur-based antioxidants are preferable, and combination use of phenolic antioxidants with sulfur-based antioxidants is more preferable.

Examples of the phenolic antioxidants include 2,6-di-tert-butyl-p-cresol, n-octadecyl-3-(3,5-di-tert-butyl-4-hydroxyphenyl) propionate, 2-tert-butyl-6-(3-tert-butyl-2-hydroxy-5-methyl benzyl)-4-methylphenyl acrylate, and tetrakis[methylene-3-(3,5-di-tert-butyl-4-hydroxyphenyl) propionate]methane. These phenolic antioxidants may be used singly or in combinations of two or more.

Further, examples of the sulfur-based antioxidants include dilauryl thiodipropionate, dimyristyl thiodipropionate, distearyl thiodipropionate, and pentaerythrityl tetrakis(3-laurylthiopropionate). These sulfur-based antioxidants may be used singly or in combinations of two or more.

The content of the antioxidants is preferably 0.1 to 10 parts by mass, more preferably 0.2 to 5 parts by mass, relative to 100 parts by mass of resin components.

Further, the foamable composition may contain additives other than above, such as decomposition temperature modifiers including zinc oxide, zinc stearate, and urea, flame retardants, metal toxicity inhibitors, antistatic agents, stabilizers, fillers, and pigments, as required.

[Method for producing foam]

The method for producing a foam is not specifically limited, but the foam can be produced, for example, by melt-kneading a foamable composition containing resin components (including the component (A), the component (B), the component (C), and other resin components, as required) and an additive such as a thermal decomposition-type foaming agent, forming the foamable composition into a desired shape, thereafter crosslinking the foamable composition by irradiation with ionizing radiation, and further foaming the foamable composition by heating.

Specifically, production by a method having the following steps (1) to (3) is industrially advantageous.

Step (1): step of supplying components of a foamable composition including a thermal decomposition-type foaming agent to a kneader, melt-kneading them at a temperature lower than the decomposition temperature of the thermal decomposition-type foaming agent, and thereafter forming the foamable composition into a desired shape such as a sheet shape;

Step (2): step of crosslinking the foamable composition obtained in step (1) by irradiation with ionizing radiation; and

Step (3): step of foaming the foamable composition crosslinked in step (2) by heating to the decomposition temperature of the foaming agent or higher to obtain a foam.

In step 1, components constituting the foamable composition are first supplied to a kneader and are melt-kneaded at a temperature lower than the decomposition temperature of the thermal decomposition-type foaming agent. Thereafter, the foamable composition melt-kneaded is formed into a desired shape, such as a sheet shape, preferably with the kneader used for melt-kneading.

Examples of the kneader to be used in step (1) include injection molding machines, extruders such as single screw extruders and twin screw extruders, and general purpose kneaders such as Banbury mixers and rolls. Injection molding machines and extruders are preferable, and good productivity can be achieved by using injection molding machines.

In step (2), the foamable composition formed into a desired shape is irradiated with ionizing radiation.

Examples of the ionizing radiation used in step (2) include α ray, β ray, γ ray, and electron beam. Electron beam is preferable.

Though the acceleration voltage of ionizing radiation depends also on the thickness of the foamable composition to be irradiated, it is preferably 400 to 1200 kV, more preferably 500 to 1100 kV, more preferably 600 to 1000 kV, for example, in the case of such a composition with a thickness of 1.5 to 8 mm,

The radiation dose of ionizing radiation needs only to allow a desired degree of crosslinking to be achieved, but is preferably 0.1 to 10 Mrad, more preferably 0.2 to 5 Mrad, further preferably 0.5 to 3 Mrad.

The radiation dose of ionizing radiation is influenced also by the proportions of resin components and additives and is therefore generally adjusted while the degree of crosslinking resulted therefrom is measured.

In step (3), after the foamable composition is crosslinked by irradiation with ionizing radiation, as described above, the foamable composition is foamed by heating to the decomposition temperature of the foaming agent or higher, thereby performing foaming and forming in parallel. As a result, a foam can be obtained.

In step (3), the temperature at which the foamable composition is heated for foaming is generally 140 to 300°C, preferably 150 to 260°C, though it depends also on the decomposition temperature of the thermal decomposition-type foaming agent used as a foaming agent. Further, in step (3), the foam may be stretched after foaming or during foaming in either or both of the MD direction and the CD direction.

[Laminate]

A laminate of the present invention includes a foam and a sheet-like material (skin material) laminated to the foam. In the laminate, the foam is in the form of a sheet, and the sheet-like material is generally adhered to the foam. Examples of the sheet-like material (skin material) include resin sheets, thermoplastic elastomer sheets, and fabrics. In the case of using the laminate for interior materials for vehicles, various materials, such as polyvinyl chloride sheets, resin sheets composed of mixed resins of polyvinyl chloride and ABS resin, thermoplastic elastomer sheets, woven fabrics, knittings, non-woven fabrics, leathers, artificial leathers, and synthetic leathers are preferably used therefor. When the laminate is formed into a formed article, such a sheet-like material is preferably disposed on the surface of the formed article.

Further, the aforementioned sheet-like material in the laminate may be provided on only one surface of the foam or on both surfaces thereof. For example, in the case of using the laminate for interior materials for vehicles, such a resin sheet, thermoplastic elastomer sheet, or fabric mentioned above may be laminated to one surface of the foam, while a resin sheet composed of polyethylene, polyprene, is disposed on the other surface.

[Formed article]

A formed article of the present invention is preferably obtained by forming the foam according to the present invention and is preferably a formed article in which the aforementioned skin material is integrated with the foam by laminating. In the present invention, the foam or the laminate is formed into a formed article by a known method. Examples of the forming method include vacuum forming, compression molding, and stamping forming. Among these, vacuum forming is preferable. Further, there are male-mold vacuum forming and female-mold vacuum forming in vacuum forming, but female-mold vacuum forming is preferable.

Further, in the case where the formed article is obtained by forming a laminate having a sheet-like material, rugged patterns are preferably formed on the surface of the sheet-like material. The rugged patterns are generally transferred from the rugged patterns on the surface of the mold during forming. At that time, the formed article is preferably formed by female-mold vacuum forming.

The formed article is used for heat insulators, cushion members, like, and is preferably used for interior materials for vehicles such as ceiling materials, doors, and instrument panels, more preferably car interior materials.

EXAMPLES

Hereinafter, the present invention will be described further in detail by way of Examples, but the scope of the present invention is not limited to these Examples.

The methods for measuring physical properties and the methods for evaluating the foam are as follows.

(1) Endothermic peak temperature by DSC

According to JIS K 7121, heat melting was performed from the room temperature (23°C) to a temperature higher than the end of the melting peak by about 30°C at a heating rate of 5°C/minute, followed by cooling to -100°C, to measure the endothermic peak.

(2) MFR

The MFR is a value measured based on JIS K 7210 under conditions of a temperature of 230°C and a load of 2.16 kgf or conditions of a temperature of 190°C and a load of 2.16 kgf.

(3) Type D durometer hardness

According to JIS K 6253, a resin formed into a plate with a thickness of 6 mm or more was subjected to a type D durometer for 1 second, to measure the value.

(4) Degree of crosslinking

About 100 mg of a test piece was taken from a foam, and the weight A (mg) of the test piece was accurately weighed. Thereafter, the test piece was immersed in 30 cm$^3$ of xylene at 120°C and allowed to stand for 24 hours. Thereafter, the test piece was filtered with a 200-mesh wire screen, and the insoluble residues on the wire screen were collected, followed by vacuum drying, to accurately weigh the weight B (mg) of the insoluble residues. From the value obtained, the degree of crosslinking (wt%) was calculated by the following formula.

$$\text{Degree of crosslinking (wt\%)} = 100 \times (B/A)$$

(5) Density

The density of the foam was measured according to JIS K 7222.

(6) Thickness of foam

The thickness was measured with a dial gauge.

(7) 25% compressive strength

The 25% compressive strength was measured at 23°C according to JIS K 6767.

(8) Elongation at break

The elongation at break was measured at 160°C according to the method described in JIS K 6251.

(9) Evaluation of proportion of each component by pulsed NMR

About 40 mg of a foam was introduced into an NMR tube with a diameter of 10 mm. A sample was set and measured in a pulsed NMR apparatus ("the minispec mq20" available from Bruker Corporation). The measurement at 30°C was performed by the Solid echo method, which will be described below, and the measurement at 160°C was performed by the Hahn echo method. The free induction decay curve of $^1$H spin-spin relaxation obtained was subjected to analysis software "TD-NMRA" available from Bruker Corporation. The hard component was fitted with the Gaussian type, and the middle component and the soft component were fitted with the exponential type. The fitting was performed using points of the relaxation curve up to 0.6 msec for analysis. Measurement of the same type was performed twice, and the average was obtained to determine the proportion of each component.

<Solid echo method>

Scans: 512 times
Recycle Delay: 1 sec
acquisition scale: 1 ms

<Hahn echo method>

Scans: 64 times
Recycle Delay: 1 sec
First 90° to 180° Pulse Separation: 0.1 msec
Final Pulse Separation: 50 msec
Number of Data Points for Fitting: 50 points

(10) Flexibility

The flexibility was determined by the following criteria.

(Criteria)

A: The 25% compressive strength is 90 kPa or less, the flexibility is excellent, and the mechanical strength is sufficient.
B: There is no practical problem in flexibility.
C: The flexibility is poor, and thus, there is a practical problem.

(11) Formability

Foams obtained in Examples and Comparative Examples were formed using a vacuum forming machine under conditions of a surface temperature of 140°C, to obtain a box-like formed article. The surface of the formed article was visually observed to evaluate the presence or absence of wrinkles according to the following evaluation criteria.

(Criteria)

A: No wrinkles are observed.
B: Wrinkles slightly occur, but there is no practical problem.
C: Wrinkles remarkably occur, and thus, there is a practical problem.

[Examples 1 , 2, Example 3 (Reference) and Comparative Examples 1 to 3]

In each of Examples and Comparative Examples, resin components and additives shown in Table 1 were put into a single screw extruder in an amount shown in Table 2, melt-kneaded at a resin temperature of 190°C, and extruded, to obtain a sheet-like foaming composition with a thickness of 1.3 mm. The foamable composition was crosslinked by irradiating both surfaces of the sheet-like foaming composition with electron beam in an amount shown in Table 2 at an acceleration voltage of 800 kV to a predetermined degree of crosslinking. Thereafter, the foamable composition crosslinked was foamed in a vapor phase oven at 250°C to give a foamed sheet (foam). The evaluation results for the foam of each of Examples and Comparative Examples are shown in Table 2.

Table 1

| | | Manufacturer name | Product name | DSC peak temperature (°C) | MFR (g/10 minutes) (PO1 to PO6: @230°C, PO7 to PO9: @190°C, PO10, PO12: @230°C, PO13: @190°C) | Type D durometer hardness |
|---|---|---|---|---|---|---|
| PO1 | TPO | LyondellBasell Industries | Hifax CA 207 A | 163 | 7.5 | 46 |
| PO2 | TPO | LyondellBasell Industries | Hifax CA 7320 A | 163 | 2.1 | 32 |
| PO3 | Homopolypropylene | Prime Polymer Co., Ltd. | J105G | 165 | 9.0 | N.D. |
| PO4 | TPO | LyondellBasell Industries | Softell CA 02 A | 142 | 0.6 | 27 |

(continued)

|  |  | Manufacturer name | Product name | DSC peak temperature (°C) | MFR (g/10 minutes) (PO1 to PO6: @230°C, PO7 to PO9: @190°C, PO10, PO12: @230°C, PO13: @190°C) | Type D durometer hardness |
|---|---|---|---|---|---|---|
| PO5 | Ethylene-propylene random copolymer | Japan Polypropylene Corporation | NOVATEC EG8B | 145 | 0.8 | N.D. |
| PO6 | Ethylene-propylene random copolymer | Japan Polypropylene Corporation | NOVATEC EG6D | 145 | 1.9 | N.D. |
| PO7 | TPO | LyondellBasell Industries | Adflex Z 101 H | 142 | 13.0 | 30 |
| PO8 | Linear low-density polyethylene | The Dow Chemical Company | Dowlex 2035G | 118 | 6.0 | N.D. |
| PO9 | Linear low-density polyethylene | The Dow Chemical Company | Dowlex SC 2111G | 120 | 3.7 | N.D. |
| POIO | Ethylene-propylene random copolymer | Japan Polypropylene Corporation | NOVATEC EG7F | 145 | 1.3 | N.D. |
| PO11 | EPDM | SUMITOMO CHEMICAL COMPANY, LIMITED | ESPRENE 301 | N.D. | N.D. | N.D. |
| PO12 | TPO | LyondellBasell Industries | Adflex Q 200 F | 163 | 0.8 | 48 |
| PO13 | Linear low-density polyethylene | The Dow Chemical Company | Dowlex 2036P | 125 | 2.5 | N.D. |
| Crosslinking aid | Trimethylolpropane trimethacrylate | | | | | |
| Antioxidant 1 | 2,6-di-tert-Butyl-p-cresol | | | | | |
| Antioxidant 2 | Dilauryl thiodipropionate | | | | | |
| Foaming agent | Azodicarbonamide | | | | | |

Table 2

| | | | Example | | | Comparative Example | | |
|---|---|---|---|---|---|---|---|---|
| | | | 1 | 2 | 3 | 1 | 2 | 3 |
| Foamable composition | Resin component (parts by mass) | PO1 | 20 | 10 | - | - | - | - |
| | | PO2 | - | - | 50 | - | - | - |
| | | PO3 | - | 10 | - | 20 | - | - |
| | | PO4 | 20 | 20 | - | - | - | - |
| | | PO5 | 20 | 20 | - | 40 | - | - |
| | | PO6 | - | - | 25 | - | - | - |
| | | PO7 | 20 | 20 | - | - | - | - |
| | | PO8 | 20 | 20 | - | 40 | - | - |
| | | PO9 | - | - | 25 | - | - | - |
| | | PO10 | - | - | - | - | 50 | 60 |
| | | PO11 | - | - | - | - | 30 | - |
| | | PO12 | - | - | - | - | 20 | - |
| | | PO13 | - | - | - | - | - | 40 |
| | Additive (parts by mass) | Crosslinking aid | 3.0 | 3.0 | 3.0 | 3.0 | 3.0 | 3.0 |
| | | Antioxidant 1 | 0.3 | 0.3 | 0.3 | 0.3 | 0.3 | 0.3 |
| | | Antioxidant 2 | 0.3 | 0.3 | 0.3 | 0.3 | 0.3 | 0.3 |
| | | Foaming agent | 9.0 | 9.0 | 9.0 | 9.0 | 9.0 | 9.0 |
| Crosslinking condition: 800-kV electron beam (Mrad) | | | 1.0 | 1.0 | 1.0 | 1.0 | 1.0 | 1.0 |
| Foam | Properties or the like | Degree of crosslinking (%) | 38 | 37 | 39 | 38 | 50 | 47 |
| | | Density (g/cm$^3$) | 0.050 | 0.052 | 0.053 | 0.049 | 0.062 | 0.063 |
| | | Thickness (mm) | 2.8 | 2.7 | 3.2 | 3.0 | 3.0 | 2.9 |
| | | 25% compressive strength (kPa) | 53 | 61 | 65 | 122 | 78 | 135 |
| | | Elongation at break (%) | 280 | 290 | 210 | 300 | 190 | 180 |
| | | Proportion of a hard component (30°C) | 39.3 | 40.6 | 47.5 | 53.1 | 39.5 | 59.3 |
| | | Proportion of a middle component (160°C) | 61.5 | 64.1 | 63.5 | 63.0 | 67.4 | 66.0 |
| Evaluation of foam | | flexibility | A | A | B | C | B | C |
| | | Occurrence of wrinkles | A | B | A | A | C | C |

As described above, the foam obtained in each of Examples 1 to 3 had a 25% compressive strength of 90 kPa or less and an elongation at break at 160°C of 150% or more and thus had excellent formability with good flexibility without the occurrence of wrinkles in the secondary processing.

Further, the foam in each of Examples 1 to 3 had a proportion of the hard component at 30°C of 50% or less and a proportion of the middle component at 160°C of 65% or less and thus had excellent formability with good flexibility without the occurrence of wrinkles in the secondary processing.

Meanwhile, as is obvious from Comparative Examples 1 to 3, foams having a 25% compressive strength of over 90 kPa or an elongation at break at 160°C of over 150% had poor flexibility with wrinkles occurring in the secondary processing and thus could not have improved formability.

Further, as is obvious from Comparative Examples 1 to 3, foams having a proportion of the hard component at 30°C of over 50% or a proportion of the middle component at 160°C of over 65% resulted in poor flexibility or poor formability.

**Claims**

1. A foam, wherein proportion of a hard component at 30°C is 50% or less relative to all components and a proportion of a middle component at 160°C is 65% or less relative to all components, in a technique to determine proportions of three components, hard, middle and soft components by pulsed NMR, measured according to the method in the description,

   wherein a free induction decay curve due to 1H spin-spin relaxation is obtained by pulsed NMR measurement and waveforms of the free induction decay curve can be separated into three curves derived from three components, hard, middle, and soft components, sequentially, from the shorter relaxation time,
   wherein the foam is obtained by crosslinking and foaming a foamable composition comprising:

   a polyolefin-based resin having an endothermic peak, as measured by a differential scanning calorimeter (DSC), present at 160°C or higher and a melt flow rate (MFR) at 230°C of 2.0 to 20 g/10 minutes in an amount of 10 to 30 mass% relative to the total amount of resin components in the foamable composition;
   a polyolefin-based resin having an endothermic peak, as measured by a differential scanning calorimeter (DSC), present at 130 to 150°C and a melt flow rate (MFR) at 230°C of 0.4 to 2.0 g/10 minutes in an amount of 30 to 50 mass% relative to the total amount of resin components in the foamable composition; and
   a polyolefin-based resin having an endothermic peak, as measured by a differential scanning calorimeter (DSC), present at 110 to 150°C and a melt flow rate (MFR) at 190°C of 2.5 to 20 g/10 minutes in an amount of 30 to 50 mass% relative to the total amount of resin components in the foamable composition, and
   wherein the melt flow rate is measured according to JIS K 7210, measured at a load of 2.16 kgf.

2. The foam according to claim 1 having a 25% compressive strength at 23°C of 90 kPa or less and an elongation at break at 160°C, as measured according to JIS K 6251, of 200% or more.

3. The foam according to claim 1 or 2, comprising one or more types of polyolefin-based resins having an endothermic peak, as measured by a differential scanning calorimeter (DSC), present at 160°C or higher and a melt flow rate (MFR) at 230°C of 2.0 to 20 g/10 minutes.

4. The foam according to claim 1, wherein the foamable composition comprises a polyolefin-based resin having a Type D durometer hardness of 60 or less in an amount of 30 to 70 mass% relative to the total amount of resin components in the foamable composition.

5. The foam according to any one of claims 1 to 4, having a degree of crosslinking, measured according to the method in the description, of 30 to 50%.

6. The foam according to any one of claims 1 to 5, having a density of 0.036 g/cm$^3$ or more and 0.133 g/cm$^3$ or less.

7. The foam according to any one of claims 1 to 6, being in the form of a sheet with a thickness of 0.5 to 5.0 mm.

8. A formed article obtained by forming the foam according to any one of claims 1 to 7.

9. The formed article according to claim 8, obtained by laminating and integrating a skin material to the foam.

10. The formed article according to claim 8 or 9, being a car interior material.

**Patentansprüche**

1. Schaum, wobei ein Anteil einer harten Komponente bei 30°C 50% oder weniger beträgt, bezogen auf alle Komponenten, und ein Anteil einer mittleren Komponente bei 160°C 65% oder weniger beträgt, bezogen auf alle Komponenten, in einer Technik zur Bestimmung von Anteilen von drei Komponenten, harten, mittleren und weichen Komponenten, durch gepulste NMR, gemessen gemäß dem Verfahren in der Beschreibung,

wobei eine Kurve des freien Induktionszerfalls aufgrund von 1 H-Spin-Spin-Relaxation durch gepulste NMR-Messung erhalten wird und Wellenformen der Kurve des freien Induktionszerfalls in drei Kurven aufgeteilt werden können, die von drei Komponenten, harten, mittleren und weichen Komponenten, sequentiell aus der kürzeren Relaxationszeit abgeleitet werden,

wobei der Schaum erhalten wird durch Vernetzen und Schäumen einer schäumbaren Zusammensetzung, umfassend:

ein Harz auf Polyolefinbasis mit einem endothermen Peak, gemessen mit einem Differential-Scanning-Kalorimeter (DSC), der bei 160°C oder höher und einer Schmelzflussrate (MFR) bei 230°C von 2,0 bis 20 g/10 Minuten in einer Menge von 10 bis 30 Massen-%, bezogen auf die Gesamtmenge an Harzkomponenten in der schäumbaren Zusammensetzung, vorliegt;

ein Harz auf Polyolefinbasis mit einem endothermen Peak, gemessen mit einem Differential-Scanning-Kalorimeter (DSC), der bei 130 bis 150°C und einer Schmelzflussrate (MFR) bei 230°C von 0,4 bis 2,0 g/10 Minuten in einer Menge von 30 bis 50 Massen-%, bezogen auf die Gesamtmenge an Harzkomponenten in der schäumbaren Zusammensetzung, vorliegt; und

ein Harz auf Polyolefinbasis mit einem endothermen Peak, gemessen mit einem Differential-Scanning-Kalorimeter (DSC), der bei 110 bis 150°C und einer Schmelzflussrate (MFR) bei 190°C von 2,5 bis 20 g/10 Minuten in einer Menge von 30 bis 50 Massen-%, bezogen auf die Gesamtmenge an Harzkomponenten in der schäumbaren Zusammensetzung, vorliegt, und

wobei die Schmelzflussrate gemäß JIS K 7210 gemessen unter einer Belastung von 2,16 kgf gemessen wird.

2. Schaum nach Anspruch 1 mit einer 25%-Druckfestigkeit bei 23°C von 90 kPa oder weniger und einer Bruchdehnung bei 160°C, gemessen gemäß JIS K 6251, von 200% oder mehr.

3. Schaum nach Anspruch 1 oder 2, umfassend eine oder mehrere Arten von Harzen auf Polyolefinbasis mit einem endothermen Peak, gemessen mit einem Differential-Scanning-Kalorimeter (DSC), der bei 160°C oder höher und einer Schmelzflussrate (MFR) bei 230°C von 2,0 bis 20 g/10 Minuten vorliegt.

4. Schaum nach Anspruch 1, wobei die schäumbare Zusammensetzung ein Harz auf Polyolefinbasis mit einer Typ-D-Durometer-Härte von 60 oder weniger in einer Menge von 30 bis 70 Massen-%, bezogen auf die Gesamtmenge an Harzkomponenten in der schäumbaren Zusammensetzung, umfasst.

5. Schaum nach einem der Ansprüche 1 bis 4 mit einem Vernetzungsgrad von 30 bis 50%, gemessen gemäß dem Verfahren in der Beschreibung.

6. Schaum nach einem der Ansprüche 1 bis 5 mit einer Dichte von 0,036 g/cm$^3$ oder mehr und 0,133 g/cm$^3$ oder weniger.

7. Schaum nach einem der Ansprüche 1 bis 6 in Form einer Folie mit einer Dicke von 0,5 bis 5,0 mm.

8. Geformter Gegenstand, erhalten durch Formen des Schaums nach einem der Ansprüche 1 bis 7.

9. Geformter Gegenstand nach Anspruch 8, erhalten durch Laminieren und Integrieren eines Hautmaterials in den Schaum.

10. Geformter Gegenstand nach Anspruch 8 oder 9, der ein Autoinnenraummaterial ist.


**Revendications**

1. Mousse, dans laquelle une proportion d'un composant dur à 30 °C est de 50 % ou moins par rapport à tous les composants et une proportion d'un composant intermédiaire à 160 °C est de 65 % ou moins par rapport à tous les composants, dans une technique pour déterminer les proportions de trois composants, des composants dur, intermédiaire et souple, par RMN impulsionnelle, mesurées conformément au procédé de la description,

dans laquelle une courbe de signal de précession libre due à une relaxation spin-spin 1H est obtenue par une mesure RMN impulsionnelle et des formes d'onde de la courbe de signal de précession libre peut être séparée en trois courbes dérivées des trois composants, les composants dur, intermédiaire et souple, de manière séquentielle, à partir du temps de relaxation plus court,

dans laquelle la mousse est obtenue en réticulant et en amenant à l'état de mousse une composition expansible comportant :

une résine à base de polyoléfine ayant un pic endothermique, lorsque mesuré par un analyseur calorimétrique différentiel (DSC), présent à 160 °C ou plus et un indice de fluidité à chaud (MFR) à 230 °C de 2,0 à 20 g/10 minutes en une quantité de 10 à 30 % en masse par rapport à la quantité totale de composants de résine dans la composition expansible ;

une résine à base de polyoléfine ayant un pic endothermique, lorsque mesuré par un analyseur calorimétrique différentiel (DSC), présent à 130 °C jusqu'à 150 °C et un indice de fluidité à chaud (MFR) à 230 °C de 0,4 à 2,0 g/10 minutes en une quantité de 30 à 50 % en masse par rapport à la quantité totale de composants de résine dans la composition expansible ; et

une résine à base de polyoléfine ayant un pic endothermique, lorsque mesuré par un analyseur calorimétrique différentiel (DSC), présent à 110 jusqu'à 150 °C et un indice de fluidité à chaud (MFR) à 190 °C de 2,5 à 20 g/10 minutes en une quantité de 30 à 50 % en masse par rapport à la quantité totale de composants de résine dans la composition expansible, et

dans laquelle l'indice de fluidité à chaud est mesuré conformément à la norme JIS K 7210, mesuré à une charge de 2,16 kgf.

2. Mousse selon la revendication 1 ayant une résistance à la compression à 25 % à 23 °C de 90 kPa ou moins et un allongement à la rupture à 160 °C, lorsqu'il est mesuré conformément à la norme JIS K 6251, de 200 % ou plus.

3. Mousse selon la revendication 1 ou 2, comportant
un ou plusieurs types de résines à base de polyoléfine ayant un pic endothermique, lorsque mesuré par un analyseur calorimétrique différentiel (DSC), présent à 160 °C ou plus et un indice de fluidité à chaud (MFR) à 230 °C de 2,0 à 20 g/10 minutes.

4. Mousse selon la revendication 1, dans laquelle
la composition expansible comporte une résine à base de polyoléfine ayant une dureté au duromètre de type D de 60 ou moins en une quantité de 30 à 70 % en masse par rapport à la quantité totale de composants de résine dans la composition expansible.

5. Mousse selon l'une quelconque des revendications 1 à 4, ayant un degré de réticulation, mesuré conformément au procédé de la description, de 30 à 50 %.

6. Mousse selon l'une quelconque des revendications 1 à 5, ayant une densité de 0,036 g/cm$^3$ ou plus et de 0,133 g/cm$^3$ ou moins.

7. Mousse selon l'une quelconque des revendications 1 à 6, se présentant sous la forme d'une feuille avec une épaisseur de 0,5 à 5,0 mm.

8. Article formé obtenu en formant la mousse selon l'une quelconque des revendications 1 à 7.

9. Article formé selon la revendication 8, obtenu en stratifiant et en intégrant un matériau de peau dans la mousse.

10. Article formé selon la revendication 8 ou 9, étant un matériau d'intérieur de voiture.

Fig. 1

FREE INDUCTION DECAY CURVE
(ACTUALLY MEASURED)

SOFT
COMPONENT
(LONG
RELAXATION
TIME)

[SIGNAL INTENSITY]

HARD
COMPONENT
(SHORT
RELAXATION
TIME)

MIDDLE COMPONENT
(INTERMEDIATE
RELAXATION TIME)

[RELAXATION TIME]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008266589 A
- JP 2016030772 A

- JP 2004276261 A